# EUROPEAN PATENT APPLICATION

(11) **EP 0 896 480 A1**
(43) Date of publication of application: **10.02.1999**
(21) Application number: 97915722.9
(22) Date of filing: 15.04.1997
(51) Int. Cl.: H04N 9/04

(54) **COLOR IMAGE PICKUP DEVICE**

(30) Priority: 25.04.1996 JP 129058/96
(71) Applicant: KUREHA KAGAKU KOGYO KABUSHIKI KAISHA, Tokyo 103 (JP)
(72) Inventor: KAT NO, Hiroki, Fukushima 974 (JP); MACHIDA, Katsuichi, Fukushima 974 (JP); SHOUJI, Masuhiro, Fukushima 979-01 (JP); OGIHARA, Takeo, Fukushima 974 (JP); SAKAGAMI, Teruo, Fukushima 974 (JP)
(74) Representative: HOFFMANN - EITLE
(86) International application number: JP9701296
(87) International publication number: WO9740631

(57) **Abstract**

A color image pickup device which can photoelectrically convert color-separated color pictures into electric signals with the purity of the light of each color component of the color pictures improved and, as a result, can reproduce clear color pictures excellent in hue and chroma reproducibility. In the image pickup device, a color purity correcting filter (2) which reduces the transmitting amount of light in a prescribed wavelength region between the peak wavelengths of individual color components by selectively absorbing the light is provided in an optical system (3).

## Description

### Technical Field

The present invention relates to a color image sensor, and more specifically, to a color image sensor capable of photoelectrically converting lights of respective color components obtained by color-separation of a color image, into electric signals with a high purity, and as a result, of reproducing a clear color image having excellent hue and chroma reproducibility.

### Background Art

In color image- or picture-processing machines such as video cameras, television cameras, digital cameras, color copying machines, color facsimile machines or color scanners, there is incorporated a color image sensor for color-separating a color image into three primary colors of red, green and blue (hereinafter referred to as RGB) and photoelectrically converting lights of the respective color components RGB into electric signals.

The above-mentioned color image sensor comprises, as an optical system, lens, an RGB color filter (or dichroic mirror and prism) for color-separating the color image into respective color components RGB, and in addition, an optical low pass filter, a near infrared ray cutting filter, etc., for removing optical noise components. Further, the color image sensor is provided with a CCD image pickup element (or image pickup tube) for photoelectrically converting the light of each of the color components RGB obtained by color-separation of the color image, into an electric signal of the corresponding RGB.

The RGB signals of the color image thus photoelectrically converted by the color image sensor are subjected to various electric conversion processing, for example, for recording and editing in the case of a video camera and are thereafter, transmitted to a color image-receiving device. The color image-receiving device reconstructs an image from respective color components based on the RGB signals to reproduce a color image.

In the above-mentioned color image sensor, the light of each of the color components RGB obtained by the color-separation using the RGB filter, etc., generally has a broad wavelength distribution. Namely, a red signal contains a component of a green light, a green signal contains components of a red light and a blue light, and a blue signal contains a component of a green light. Therefore, the purity of the RGB signals thus photoelectrically converted is not high, so that the color image reproduced on the basis of the RGB signals by the color image-receiving device is unsatisfactory in clarity and is dull in color.

The present invention has been attained in view of the above-mentioned circumstances. It is an object of the present invention to provide a color image sensor which can photoelectrically convert lights of respective color components obtained by color-separation of a color image, into electric signals with a high purity, and as a result, can reproduce a clear color image having excellent hue and chroma reproducibility.

### Disclosure of the Invention

To accomplish the aim, in accordance with the present invention, there is provided a color image sensor adapted for color-separating a color image into color components and photoelectrically converting lights of the color components into electric signals, which device comprises a color purity-correcting filter arranged in an optical system and capable of selectively absorbing light having a predetermined wavelength region between peak wavelengths of the lights of color components to reduce the transmitting amount of the light. In this case, it is preferred that the color purity-correcting filter is arranged on the frontmost or rearmost side of the optical system. In addition, the color purity-correcting filter may constitute an image pickup lens provided in the optical system.

In the present invention, the color purity-correcting filter may be constituted, for example, by an optical filter comprising a matrix composed of a transparent synthetic resin or glass and containing a predetermined amount of rare earth metal ions. The color purity-correcting filter has such a property that light having a predetermined wavelength region between the peak wavelengths of individual color components RGB (e.g., wavelength regions between 490 to 520 nm and between 560 and 600 nm) can be selectively absorbed, thereby reducing the transmitting amount of the light.

### Brief Description of the Drawings

Fig. 1 is a view schematically showing a structure of a color image sensor;
Fig. 2 is a block diagram showing a transmission path of RGB signals from the color image sensor to a color image-receiving device;
Fig. 3 is a graph showing wavelength regions absorbed by a color purity-correcting filter of the color image sensor;
Fig. 4 is a graph showing an optical transmittance of the color purity-correcting filter; and
Fig. 5 is a graph showing an optical transmittance of another color purity-correcting filter as described in Example.

### Best Mode for Carrying out the Invention

In the following, a color image sensor according to one preferred embodiment of the present invention is explained with reference to the accompanying drawings.

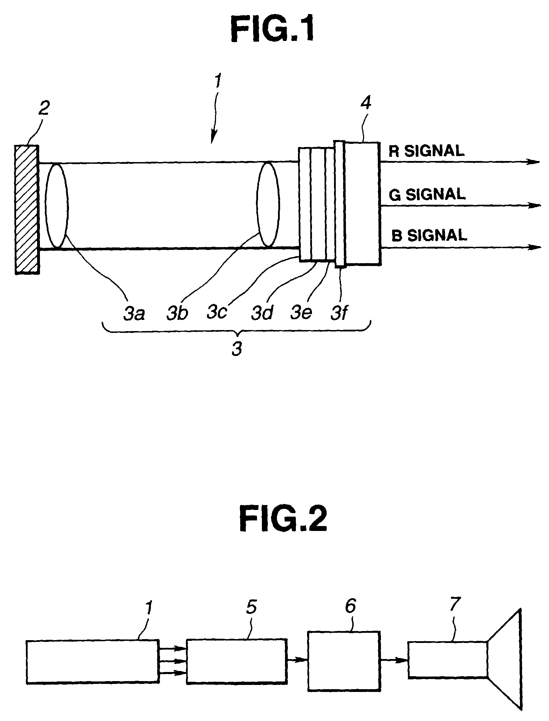

The color image sensor (1) according to the present invention adapted to color-separate a color image into respective color components and photoelectrically convert lights of the color components into electric signals, comprises a color purity-correcting filter (2) which is arranged in an optical system (3) to absorb light having a predetermined wavelength region between peak wavelengths of the respective color components, thereby reducing the transmitting amount of the light (refer to Fig. 1).

The optical system (3) of the color image sensor (1) comprises generally lens (3a) and (3b) for picking up a color image, and on a rear side thereof, an optical low pass filter (3c), a near infrared ray cutting filter (3d) and an optical low pass filter (3e) which serve for removing optical noise components. Further, on the rear side of the optical low pass filter 3(e), there is arranged an RGB color filter (3f) for separating the picked-up color image into respective color components RGB. The optical system (3) of such a construction has been already adopted in commercially available color image sensors (1) and, therefore, it is convenient to use these optical systems. Lights of the respective color components RGB obtained by color-separation of the color image by the RGB color filter (3f) of the optical system (3), are photoelectrically converted into electric signals corresponding to the respective color components RGB by a CCD image pickup element (4).

The color purity-correcting filter (2) is disposed on a front side of the image pickup lens (3a), and integrated with the optical system (3). The color purity-correcting filter (2) may be constituted by an optical filter comprising a matrix composed of a transparent synthetic resin or glass and containing a predetermined amount of rare earth metal ion.

As the transparent synthetic resin, there may be exemplified acrylic-based resins, carbonate-based resins, urethane-based resins, olefin-based resins or the like. From the standpoint of compatibility with the rare earth metal ion, there may be suitably used functional group-containing transparent synthetic resins which contain a phosphoric acid group and an amide group in a total amount of 0.5 to 60 % by weight (wherein the amount of the amide group is not more than 95 % by weight based on the total amount of the functional groups). It is preferred that the phosphoric acid group represented by the formula: PO(OH)ₙ-(wherein n is 1 or 2), is chemically bonded to a molecular structure of the synthetic resin. In addition, it is preferred that the amide group represented by the formula: =N-CO-, is chemically bonded to a molecular structure of the synthetic resin similarly to the phosphoric acid groups. Among them, as the more preferred transparent synthetic resins, there may be exemplified acrylic-based resins having both the functional groups chemically bonded to a molecular structure of the synthetic resin.

As the preferred acrylic-based resins, there may be exemplified resins produced from phosphoric acid group-containing monomers represented by the formula: PO(OH)ₙR₃₋ₙ (wherein n is 1 or 2) or resins produced from an acrylic monomer to which the above-mentioned phosphoric acid group is bonded and a monomer to which the amide group is bonded. In the above formula, R represents CH₂=CXCOO(C₂H₄O)ₘ-(wherein X is a hydrogen atom or a methyl group, and m is an integer of 0 to 5).

As the rare earth metal ions, there may be exemplified one or more ions selected from the group consisting of neodymium ion, praseodymium ion, erbium ion, holmium ion and the like. It is preferred that the rare earth ion contains neodymium ion as an essential ion. Incidentally, these ions may be usually used in the form of trivalent ions. The content of the metal ions is usually 0.01 to 40 parts by weight, preferably 0.04 to 30 parts by weight based on 100 parts by weight of the matrix.

The color purity-correcting filter (2) can selectively absorb light having a predetermined wavelength region between peak wavelengths of the respective color components RGB, thereby reducing the transmitting amount of the light. More specifically, assuming that the peak wavelengths of the color components RGB are 620 nm, 530 nm and 450 nm, respectively, the color purity-correcting filter (2) can absorb light having a wavelength between 560 nm and 600 nm and between 490 nm and 520 nm, thereby reducing the transmittance thereof to 40 to 95 % (preferably 50 to 95%).

Next, the operation of the color image sensor (1) having the above-mentioned construction and an example of use of the device are explained below. The color image sensor (1) is incorporated in video cameras, television cameras, digital cameras, color copying machines, color facsimile machines, color scanners or the like in a built-in manner. For example, as shown in Fig. 2, the color image sensor (1) built in a television camera is adapted to output RGB signals of a color image to a converter (5) which performs electric conversion processing for recording and editing of the color image. The RGB signals are transmitted through a transmission system (6) and inputted to a color image-receiving device (7) where color components based on the RGB signals received are processed to reconstruct or synthesize an image, thereby reproducing the color image.

In the color image sensor (1), as shown in Fig. 1, a color image of an objective to be picked up is transmitted successively through the color purity-correcting filter (2), the image pickup lens (3a) and (3b), the optical low pass filter (3c), the near infrared ray cutting filter (3d) and the optical low pass filter (3e) to the RGB color filter (3f) where the color image transmitted is color-separated into lights of the respective color components RGB.

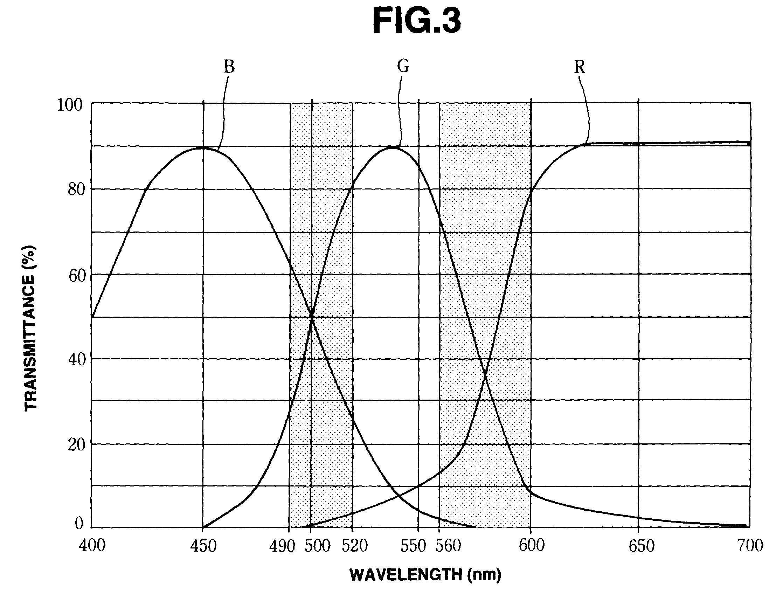

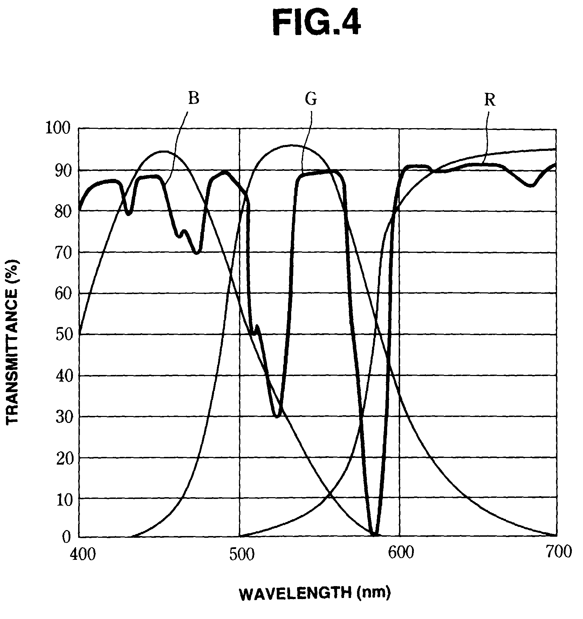

In this case, the color purity-correcting filter (2) previously absorbs light having a predetermined wavelength region between peak wavelengths of the respective color components RGB of the color image, that is, wavelength regions between 560 nm and 600 nm and between 490 nm and 520 nm as shown in Fig 3, so that the transmitting amount of the light is reduced to 40 to 95 % (preferably 50 to 95 %). For this reason, as shown in Fig. 4, with respect to the color components RGB obtained by color-separation of the color image by the RGB color filter (3f), the transmittance of a red light component on the green light side is reduced, the transmittance of a green light component on both the red and blue light sides is reduced, and the transmittance of a blue light component on the green light side is reduced. Accordingly, lights of the respective color components RGB obtained by the color-separation have a high color purity. Since the high-purity lights of the respective color components RGB are subjected to photoelectric conversion by the CCD image pickup element (4), there can be obtained R, G and B signals having a high purity. As a result, it becomes possible to reproduce a clear color image having excellent hue and chroma reproducibility by the color image-receiving device (7).

Meanwhile, in the present invention, the color purity-correcting filter (2) may be arranged immediately before the CCD image-pickup element (4) located on the rearmost side of the optical system (3). In any case, since the high-purity lights of the respective color components RGB of the color image are photoelectrically converted into the RGB signals by the CCD image-pickup element (4), it is possible to reproduce a clear color image.

Further, the color purity-correcting filter (2) may be omitted by arranging lens (3a) or (3b) composed of the same optical material as that of the color purity-correcting filter (2), in the optical system (3). In this case, it becomes possible to realize compact arrangement of the optical system (3) of the color image sensor (1).

### Examples

The present invention will now be described in more detail with reference to the following examples, but the present invention is not restricted to those examples and various modifications are possible within the scope of the invention. In Examples, a color image of an objective was picked up by the color image sensor (1) under the respective conditions that the color purity-correcting filter (2) is mounted thereto and dismounted therefrom. The chromaticities of the respective color images reproduced on the color image-receiving device (7) were compared with each other by a spectrometer according to XYZ color specification system.

Incidentally, "Color CCD Camera Module B7370" (manufactured by MATSUSHITA DENSHI KOGYO CO., LTD.) was used as the color image sensor; "Color Analyzer CA100 for CRT" (manufactured by MINOLTA CO., LTD.) was used as the spectrometer; and "CRT Display TH33A2 Model" (manufactured by MATSUSHITA DENKI SANGYO CO., LTD.) was used as the color image-receiving device.

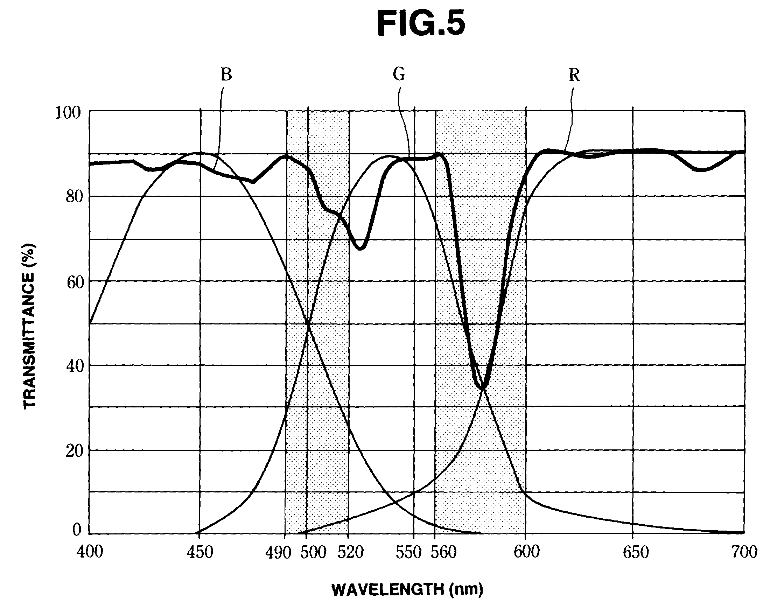

The color purity-correcting filter (2) was an optical filter having a thickness of 2 mm and containing neodymium ion in an amount of 4.25 parts by weight based on 100 parts by weight of a matrix composed of an acrylic-based resin. The color purity-correcting filter (2) was produced by mixing and dissolving raw components having such a composition as shown in Table 1 below, pouring the resultant solution into a glass mold for molding a 2 mm-thick product and subjecting the solution to polymerization according to a temperature program shown in Table 1 below. The optical transmittance of the thus produced color purity-correcting filter (2) regarding RGB color components are shown in Fig. 5.

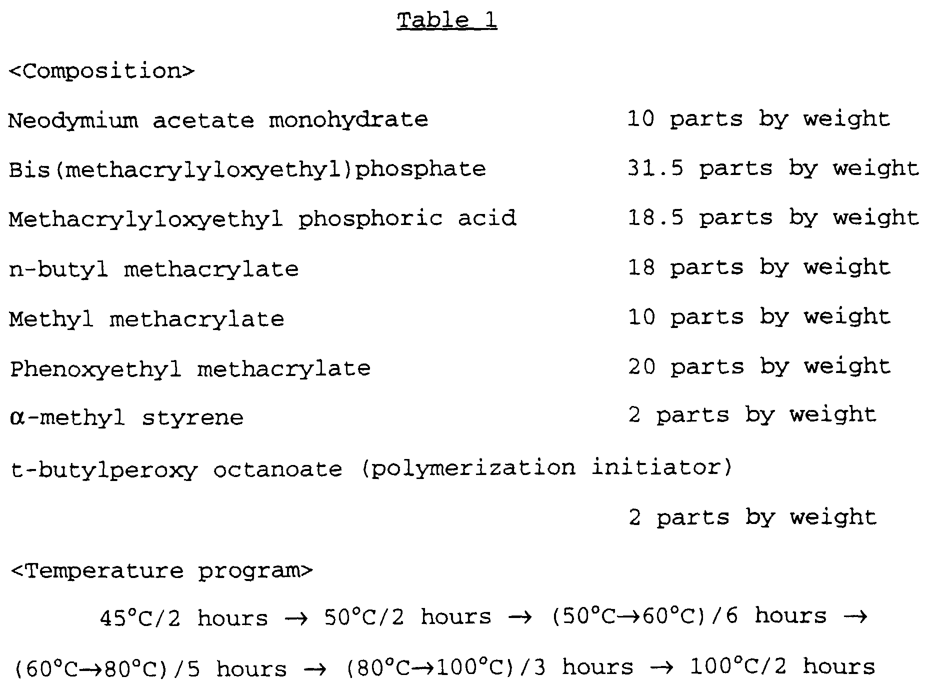

The results of the measurements are shown in Table 2 below. In Example in which the color purity-correcting filter (2) was used, the chromaticities of the respective color components R (red), G (green) and B (blue) were apart from a white color center point of the XYZ color specification system as compared to those of Comparative Example in which no color purity-correcting filter (2) was used. Therefore, it was confirmed that the color purity of Example was higher than that of Comparative Example.

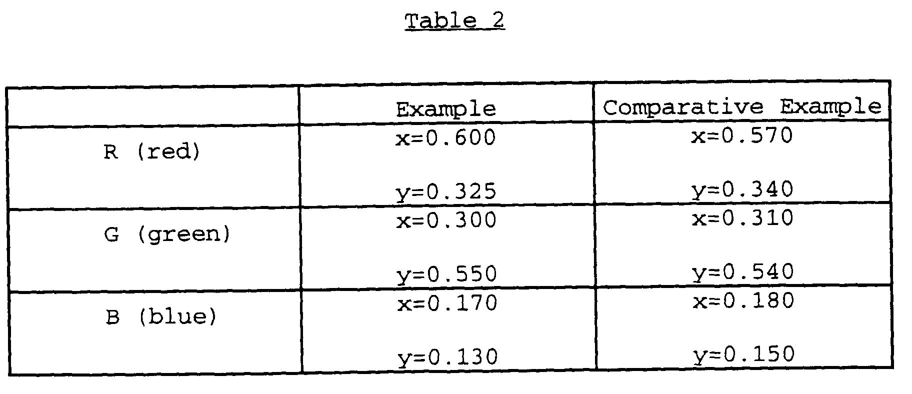

### Industrial Applicability

As described above, in accordance with the present invention, the color purity-correcting filter arranged in the optical system can selectively absorb light having a predetermined wavelength region between peak wavelengths of respective color components obtained by color-separation of a color image to reduce the transmitting amount of the light, so that the respective color components of the color image can be photoelectrically converted into electric signals with a high color purity. In addition, as a result, it is possible to reproduce a clear color image having excellent hue and chroma reproducibility.

Further, in accordance with the present invention, the color purity-correcting filter can be arranged at the frontmost or rearmost side of the optical system, so that conventional optical systems can be used therein, and a color image sensor can be readily produced.

Furthermore, in accordance with the present invention, the color purity-correcting filter can also constitute an image pickup lens provided in the optical system, so that it becomes possible to realize compact arrangement of the optical system of the color image sensor.

## Claims

1. A color image sensor adapted for converting lights of color components obtained by the color-separation of a color image into electric signals, comprising a color purity-correcting filter arranged in an optical system thereof, which is capable of selectively absorbing light having a predetermined wavelength region between peak wavelengths of said color components to reduce the transmitting amount of the light.

2. A color image sensor according to claim 1, wherein said predetermined wavelength region is between 490 to 520 nm and between 560 to 600 nm.

3. A color image sensor according to claim 1, wherein said color purity-correcting filter is arranged on the frontmost side of said optical system.

4. A color image sensor according to claim 1, wherein said color purity-correcting filter is arranged on the rearmost side of said optical system.

5. A color image sensor according to claim 1, wherein said color purity-correcting filter constitutes an image pickup lens provided in said optical system.

6. A color image sensor according to claim 1, wherein said color purity-correcting filter is constituted by an optical filter comprising a matrix composed of a transparent synthetic resin or glass and containing a predetermined amount of ions selected from the group consisting of neodymium ion, praseodymium ion, erbium ion and holmium ion.

7. A color image sensor according to claim 1, wherein said color purity-correcting filter is constituted by an optical filter comprising a matrix composed of a transparent synthetic resin or glass and containing a predetermined amount of ions selected from the group consisting of neodymium ion, praseodymium ion, erbium ion and holmium ion, and is arranged on the frontmost side of said optical system.

8. A color image sensor according to claim 1, wherein said color purity-correcting filter is constituted by an optical filter comprising a matrix composed of a transparent synthetic resin or glass and containing a predetermined amount of ions selected from the group consisting of neodymium ion, praseodymium ion, erbium ion and holmium ion, and is arranged on the rearmost side of said optical system.

9. A color image sensor according to claim 1, wherein said color purity-correcting filter is constituted by an optical filter comprising a matrix composed of a transparent synthetic resin or glass and containing a predetermined amount of ions selected from the group consisting of neodymium ion, praseodymium ion, erbium ion and holmium ion, and constitutes an image pickup lens provided in said optical system.

10. A color image sensor adapted for converting lights of color components obtained by the color-separation of a color image into electric signals, comprising a color purity-correcting filter arranged in the frontmost or rearmost side of an optical system and capable of selectively absorbing light having a wavelength of from 490 to 520 nm and from 560 to 600 nm between peak wavelengths of said color components to reduce the transmitting amount of the light, said color purity-correcting filter being constituted by an optical filter comprising a matrix composed of a transparent synthetic resin or glass and containing a predetermined amount of ions selected from the group consisting of neodymium ion, praseodymium ion, erbium ion and holmium ion.

11. A color image sensor adapted for converting lights of color components obtained by the color-separation of a color image into electric signals, comprising a color purity-correcting filter arranged in an optical system so as to constitute an image pickup lens thereof, and capable of selectively absorbing light having a wavelength of from 490 to 520 nm and from 560 to 600 nm between peak wavelengths of said color components to reduce the transmitting amount of the light, said color purity-correcting filter being constituted by an optical filter comprising a matrix composed of a transparent synthetic resin or glass and containing a predetermined amount of ions selected from the group consisting of neodymium ion, praseodymium ion, erbium ion and holmium ion.
